# EUROPÄISCHE PATENTANMELDUNG

(11) **EP 2 532 555 A2**
(43) Veröffentlichungstag der Anmeldung: **12.12.2012**
(21) Anmeldenummer: 11466026.9
(22) Anmeldetag: 07.10.2011
(51) Int. Cl.: B60R 9/058

(54) **Befestigungsvorrichtung für eine Dachreling**

(30) Priorität: 08.10.2010 CZ 20100736
(71) Anmelder: Skoda Auto a.s., 293 60 Mladá Boleslav (CZ)
(72) Erfinder: Novotny, Miroslav, 16000 Praha (CZ)

(57) **Zusammenfassung**

Befestigungsvorrichtung für eine Dachreling wird durch ein Dachrelingskörper (2), der Befestigungsfüße (3) mit Öffnungen (4) aufweist, und weiter durch eine Befestigungshalteplatte (6) gebildet. Diese weist ein Fixierungselement (10) in Form einer Zylinderhülse (19) auf, die vorteilhaft in sechs elastische Elemente (11) aufgeteilt ist, welche Sicherungslaschen (13) aufweisen. Durch das Einsetzen des Fixierungselementes (10) in eine Dachöffnung (18) und das nachfolgende Eindrücken wird die Befestigungshalteplatte (6) gegenüber einem Dach (15) fest fixiert, was ihre Befestigung zum Außenseitenteil (22) des Fahrzeuges mit einem Strukturkleber (21) ermöglicht, bevor die Befestigungshalteplatte (6) zur Fahrzeugkarosserie dauerhaft befestigt wird.

## Beschreibung

### Technisches Gebiet

Die Erfindung betrifft die Befestigung einer Dachreling bei Kraftfahrzeugen.

### Bisheriger Stand der Technik

In der Kraftfahrzeugkonstruktion werden derzeit Dachrelings verwendet, die nicht nur das Erscheinungsbild des Fahrzeuges designmäßig unterstreichen, sondern auch einen praktischen Nutzen haben. Nach Einbau des Befestigungszubehörs können damit geräumige Gegenstände wie z.B. Skier, Fahrräder, Leiter u.ä. transportiert werden. Sie dienen auch zur Beförderung von Dachboxen, die zum Transport von Gegenständen genutzt werden, die nicht im Gepäckraum verstaut werden können.

Die Befestigung der Dachreling bei Kraftfahrzeugen wird in der Regel mit einer Schraubverbindung gelöst, wobei diese wegen der Festigkeit nicht direkt am Dach, sondern an den Tragelementen der Dachkonstruktion befestigt werden. Bekannt ist die Lösung mit Konsolen und zwar so, dass die Konsole, welche etwa die Form des L-Buchstabens hat, mit ihrem vertikalen Teil am Dachabschnitt des Fahrzeugseitenteils angeschraubt ist und am horizontalen Teil der Konsole wird der Dachreling befestigt. Zur Befestigung wird eine Schraube mit Mutter verwendet, wobei zwischen der Konsole und dem Dach eine Formplatte ist, welche das Dach an der Auflagefläche des Fußes der länglichen Dachreling abstützt. Weitere Alternative stellt die Befestigung der Dachreling mittels eines Halters dar. Der Halter etwa in Form des Z-Buchstaben ist mit seinem unteren Schenkel mit einem Strukturkleber zu den Konstruktionsteilen des Daches befestigt. Der obere dem Dach zugewandte Schenkel des Halters weist eine Öffnung auf, die koaxial mit der Öffnung im Dach ist. Die Dachreling wird mit den Füßen mit Schrauben in die Öffnungen im Dach und in die Halter eingesetzt, deren Anzahl in der Regel der Anzahl der Befestigungsfüße entspricht. Mit den Müttern wird die Dachreling endfixiert. Der Nachteil genannter Lösung ist die Tatsache, dass während des Aushärtens des Strukturklebers im Trockner der Halter fixiert werden muss, bis der Kleber ausgehärtet ist. Der Grund dafür ist, das die Position des Halters gegenüber dem Dach sowie die Koaxialität der Öffnungen des Halters und des Daches sichergestellt werden muss. Alle heute verwendete oder technisch mögliche Fixierungsarten sind aufwändig sowohl bezüglich der Ausstattung, wie auch der Arbeitszeit der Bedienung. Bisher wurde der Halter zum Dach mit Schweißpunkten, Pressverbindungen fixiert, eventuell werden Nietmutter, Prozessschrauben oder Blindnieten eingesetzt.

### Darstellung der Erfindung

Die Aufgabe wird durch eine Befestigungsvorrichtung für eine Dachreling gelöst, die aus einem Dachrelingskörper mit Befestigungsfüßen besteht, wo der Dachrelingskörper mit den Befestigungsfüßen an der Dachaußenfläche angeordnet ist. Weitere Bestandteile bilden die Befestigungshalteplatten, die an der Dachinnenfläche angeordnet und zum Außenseitenteil der Karosserie angebracht sind, wobei der Dachrelingskörper über die Befestigungsfüße zu den Befestigungshalteplatten mit den über die Dachöffnungen durchgehenden Schrauben befestigt ist. Die Darstellung der Erfindung liegt darin, dass jede Befestigungshalteplatte mindestens ein Fixierungselement aufweist, das wenigstens über eine Dachöffnung durchgeht und die Befestigungshalteplatte in einer stabilen Stellung gegenüber dem Fahrzeugdach fixiert, bevor die Befestigungshalteplatte zum Außenseitenteil dauerhaft befestigt und der Dachrelingskörper angebracht wird. Das Einsetzen des Fixierungselementes in die Dachöffnung und nachfolgende Fixierung der Befestigungshalteplatte wird dadurch ermöglicht, dass ein Teil des Fixierungselementes wenigstens in zwei elastische Elemente aufgeteilt ist, welche eine Sicherungslasche aufweisen. Die stabile Stellung der Befestigungshalteplatte ist auch dadurch gesichert, dass das Fixierungselement vorteilhaft aus thermisch stabilisiertem Werkstoff fertiggestellt ist.

### Übersicht der Figuren der Zeichnungen

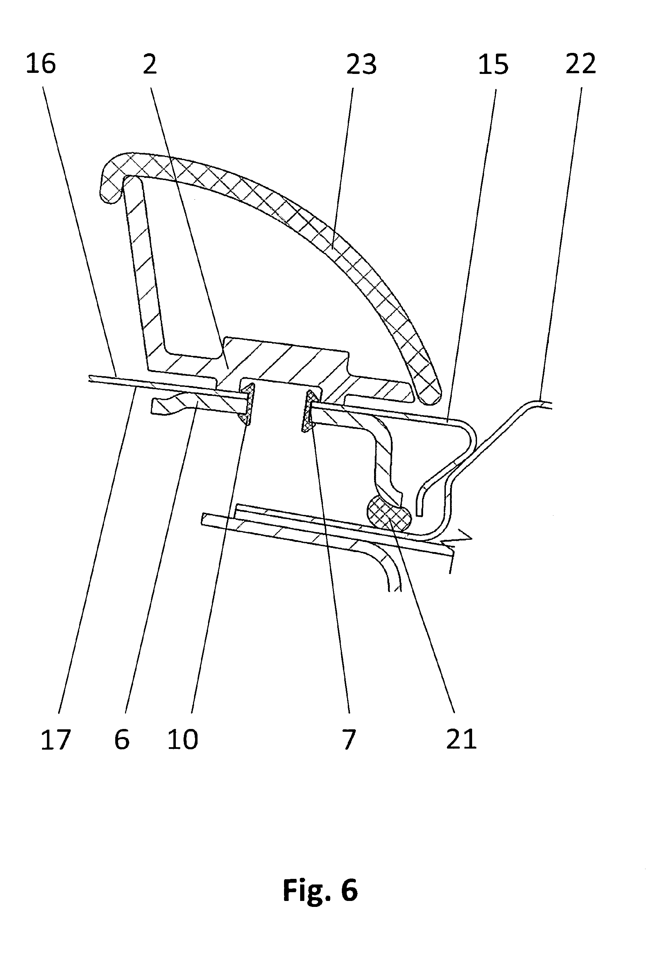

Die Erfindung wird näher anhand der Ausführungsbeispiele gemäß den beigefügten Zeichnungen erläutert, in denen die Fig. 1 in einer perspektivischen Ansicht das Fahrzeugdach mit einer Explosionszeichnung der Dachreling, die Fig. 2 einen Schnitt der Dachrelingsbefestigung, die für den Einbau von außen des Kraftfahrzeuges ausgestaltet ist, die Fig. 3 einen Schnitt des Fahrzeugdaches mit Fixierungselement in einem Teilschnitt, die Fig. 4 einen Schnitt der Befestigung des Dachrelingskörpers, die für den Einbau von innen des Kraftfahrzeuges ausgestaltet ist, die Fig. 5 einen Schnitt der Dachrelingsbefestigung, die für den Einbau von innen des Kraftfahrzeuges ausgestaltet ist und wo das Fixierungselement ein Bestandteil der Befestigungshalteplatte ist und die Fig. 6 einen Schnitt der Dachrelingsbefestigung, wo das Fixierungselement ungleichachsig gegenüber der Befestigungsschraube angeordnet ist, darstellt.

### Ausführungsbeispiel der Erfindung

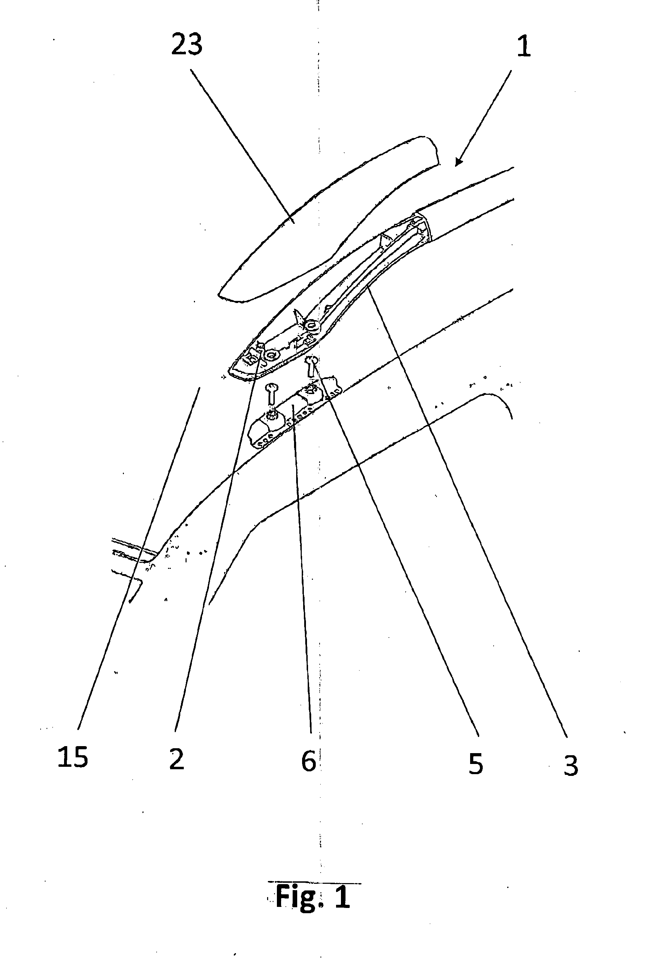

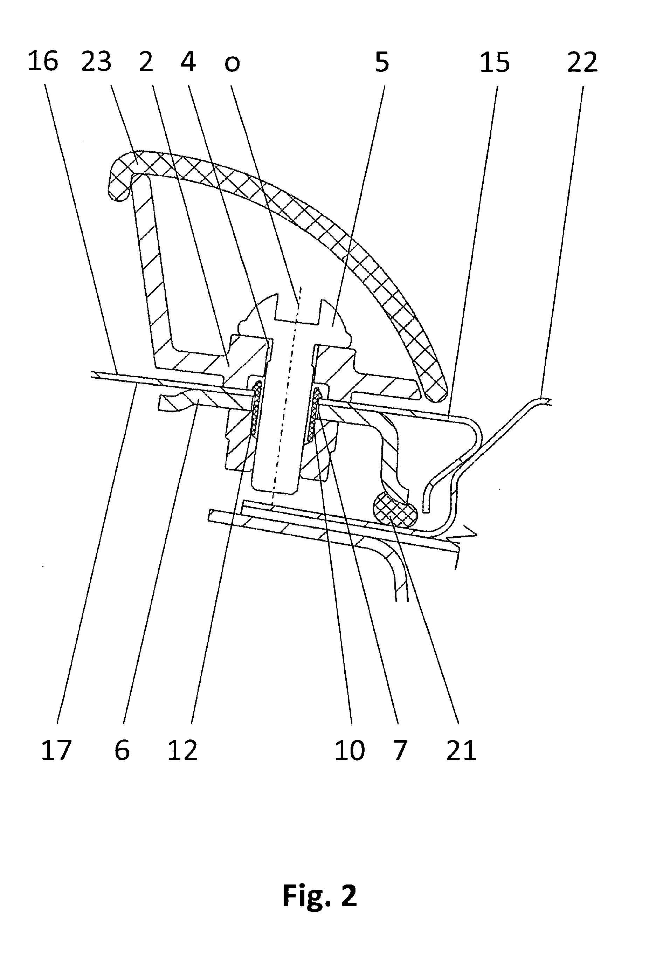

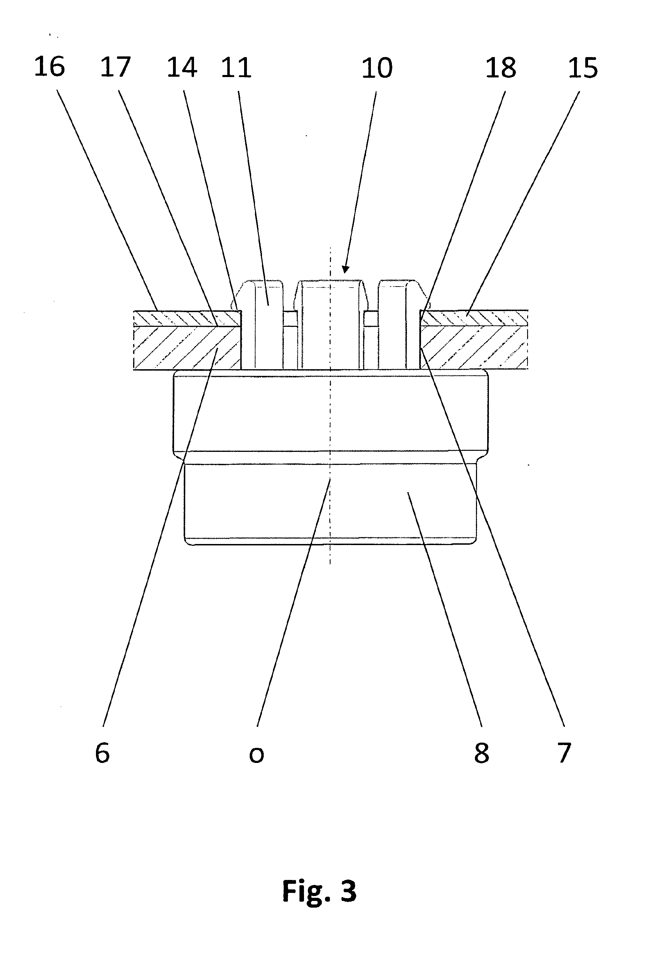

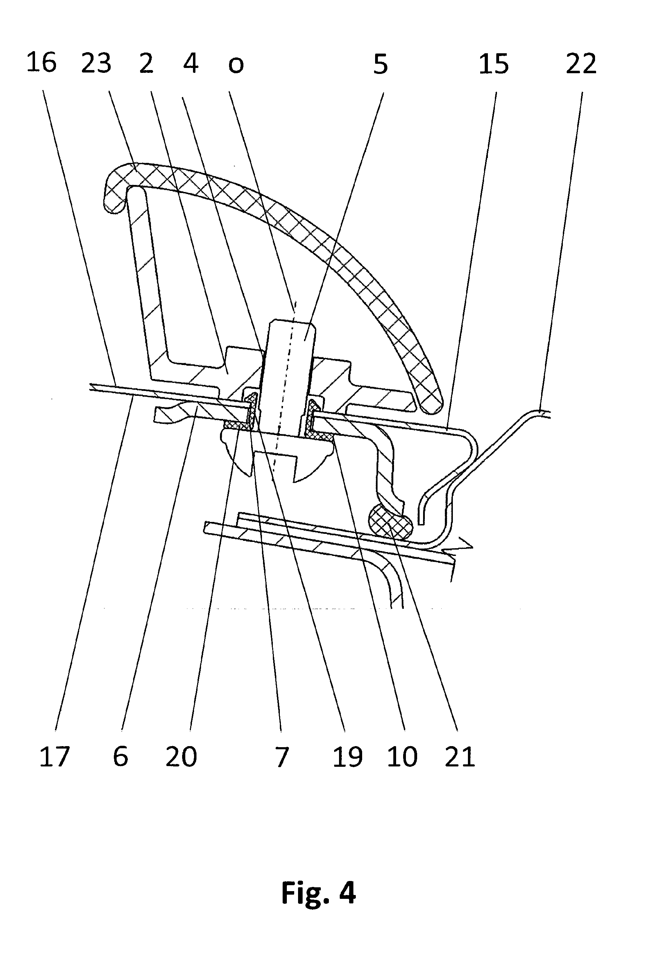

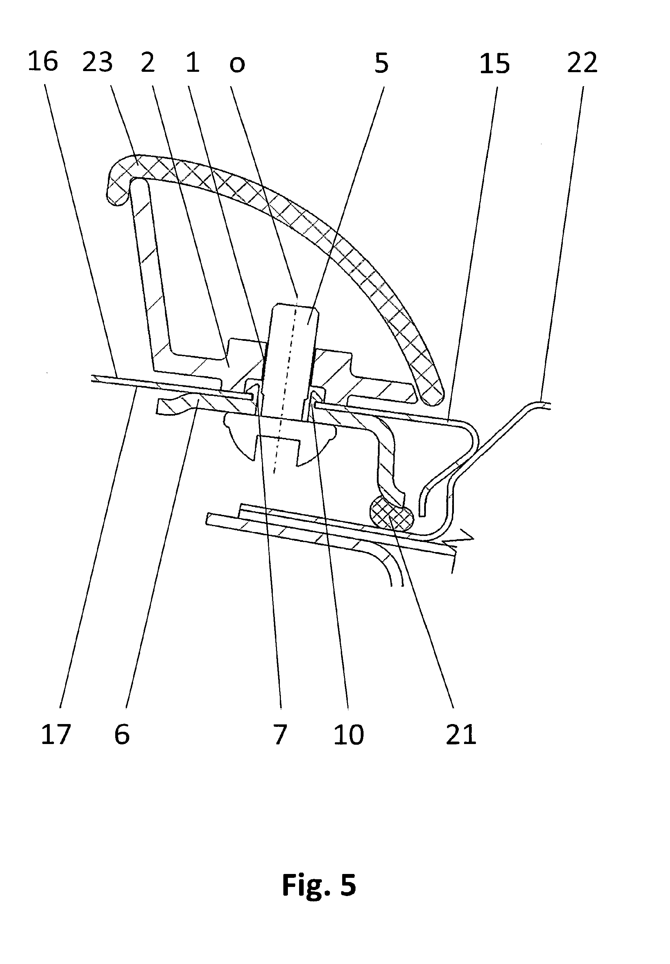

In Fig. 1 sind die Einzelteile der zur Befestigung an die Dachaußenfläche 16 des Fahrzeuges vorgesehenen Dachreling 1 dargestellt. Die Dachreling 1 besteht aus dem Dachrelingskörper 2 mit Befestigungsfüßen 3. Nach Fahrzeugtyp befinden sich an einer Dachreling 1 zwei oder drei Dachrelingsfüße 3. In jedem Befestigungsfuß 3 befindet sich mindestens eine Öffnung 4 für die Befestigungsschraube 5. Einen weiteren Bestandteil bildet die Befestigungshalteplatte 6. Die Anzahl der Befestigungshalteplatten 6 stimmt mit der Anzahl der Befestigungsfüße 3 überein. Die Befestigung der Dachreling 1, bzw. deren Einbau, kann prinzipiell entweder von innen oder von außen des Fahrzeuges erfolgen, dementsprechend sind auch die Konstruktionsvarianten der Ausführung der Fixierung der Befestigungshalteplatte 6 ausgeführt. In Fig. 2 ist die Ausführungsvariante mit dem Einbau der Befestigungshalteplatte 6 von außen des Fahrzeuges dargestellt. In diesem Fall weist die Befestigungshalteplatte 6 eine Öffnung 4 und koaxial dazu eine befestigte Mutter 8 auf. Die Mutter 8 weist einen Innenloch 9 auf, in dem ein Fixierungselement 10 angeordnet ist. Dieses kann in der Mutter 8 eingepresst eventuell angeschraubt sein. In der angeführten Ausführung weist der Innenloch 9 ein Innengewinde 12 auf. Ein Teil des Fixierungselementes 10 ist außerhalb der Mutter 8 mindestens in zwei elastische Elemente 11 aufgeteilt. Die erfindungsgemäße vorteilhafte Ausführung umfasst sechs elastische Elemente 11. Jedes elastische Element 11 wird mit einer Sicherungslasche 13 versehen, wobei die Sicherungslasche 13 eine Laschenfläche 14 aufweist. In Fig. 3 ist weiter eine Ausführung der Erfindung dargestellt, die für den Einbau der Dachreling 1 von innen des Fahrzeuges ausgestaltet ist, wo das Fixierungselement 10, bestehend aus einer Zylinderhülse 19 mit einem Stützkragen 20, in der Öffnung 4 der Befestigungshalteplatte 6 angeordnet ist. Eine Variante dieser Ausführung ist die Anordnung nach Fig. 4, wo das Fixierungselement 10 in der Befestigungshalteplatte 6 integriert ist. In Fig. 5 ist dann die Variante dargestellt, bei der das Fixierungselement 10 außerhalb der Achse o der Befestigungsschraube 5 angeordnet ist. In diesem Fall sind die Sicherungslaschen 13 an beiden Seiten des Fixierungselementes 10 ausgebildet.

Der Befestigung der Dachreling 1 auf dem Dach 15 des Kraftfahrzeuges geht zuerst eine Vorbereitungsphase voraus. Während dieser wird eine temporäre Fixierung der Befestigungshalteplatte 6 zur Dachinnenfläche 17 des Fahrzeuges so vorgenommen, dass das Fixierungselement 10, das in der zur Befestigungshalteplatte 6 befestigten Mutter 8 angeschraubt oder eingepresst ist, von der Innenseite in die Dachöffnung 18 des Fahrzeuges eingesetzt wird. Durch nachfolgendes Eindrücken rasten die elastischen Elemente 11 so ein, dass die Laschenflächen 14 an die Dachaußenfläche 16 des Fahrzeuges anlehnen. Analog wird die Fixierung der Befestigungshalteplatten 6 nach Varianten gemäß Fig. 3 bis 5 ausgeführt. In dieser Phase ist die Befestigungshalteplatte 6 ausreichend fixiert und die nachfolgende Arbeitsfolge, die darin besteht, dass ein Strukturkleber 21 zwischen der Befestigungshalteplatte 6 und dem Außenseitenteil 22 des Kraftfahrzeuges angewendet wird, erfolgen kann. Nach dem Einlegen des Daches 15, dem Aushärten des Strukturklebers 21 im Trockner und dem Durchgang der Karosserie durch das Lackiersystem wird an die Dachaußenfläche 16 des Fahrzeuges der Dachrelingskörper 2 aufgelegt und die Befestigungsschrauben 5 zu den Befestigungshalteplatten 6 und de facto zum Dach 15 des Kraftfahrzeuges festgemacht. Auf den Dachrelingskörper 2 wird dann die Abdeckung 23 aufgesetzt.

Damit während des Befestigungsprozesses das Dach 15 des Fahrzeuges nicht deformiert wird, ist im Prozessablauf in der Richtung der Achse o der Befestigungsschraube kein Spiel zulässig. Um dieser Forderung zu entsprechen ist das Fixierungselement 10 aus einem thermisch stabilisierten Werkstoff, wie zum Beispiel einem thermisch stabilisierten Kunststoff oder Metall fertiggestellt.

### Bezugszeichenliste

- 1: Dachreling
- 2: Dachrelingskörper
- 3: Befestigungsfuß
- 4: Öffnung
- 5: Befestigungsschraube
- 6: Befestigungshalteplatte
- 7: Öffnung der Halteplatte
- 8: Mutter
- 9: Innenöffnung
- 10: Fixierungselement
- 11: elastisches Element
- 12: Innengewinde
- 13: Sicherungslasche
- 14: Laschenfläche
- 15: Dach
- 16: Dachaußenfläche
- 17: Dachinnenfläche
- 18: Dachöffnung
- 19: Zylinderhülse
- 20: Stützkragen
- 21: Strukturkleber
- 22: Außenseitenteil
- 23: Abdeckung
- o: Achse der Befestigungsschraube

## Patentansprüche

1. Befestigungsvorrichtung für eine Dachreling eines Kraftfahrzeuges, die durch einen die Befestigungsfüßen aufweisenden Dachrelingskörper, der mit Befestigungsfüßen an einer Dachaußenfläche eines Kraftfahrzeuges angeordnet ist, weiter durch die an einer Dachinnenfläche eines Kraftfahrzeuges angeordneten und zum Außenseitenteil befestigten Befestigungshalteplatten gebildet wird, wobei der Dachrelingskörper über die Befestigungsfüßen mit den über eine Dachöffnungen durchgehenden Schrauben zu den Befestigungshalteplatten befestigt ist, **dadurch gekennzeichnet, dass** durch mindestens eine Dachöffnung (18) ein Fixierungselement (10) durchgeht, das die Befestigungshalteplatte (6) in einer stabilen Stellung gegenüber einem Dach (15) eines Fahrzeuges fixiert, bevor die Befestigungshalteplatte (6) zum Außenseitenteil (22) dauerhaft befestigt und die Dachreling (1) eingebaut wird.

2. Befestigungsvorrichtung für eine Dachreling eines Kraftfahrzeuges nach Anspruch 1 **dadurch gekennzeichnet, dass** das Fixierungselement (10) in Form einer Zylinderhülse (19) mindestens in zwei elastische Elemente (11) aufgeteilt ist, welche Sicherungslaschen (13) aufweisen.

3. Befestigungsvorrichtung für eine Dachreling eines Kraftfahrzeuges nach Ansprüchen 1 und 2 **dadurch gekennzeichnet, dass** das Fixierungselement (10) aus einem thermisch stabilisierten Werkstoff fertiggestellt ist.
